# EUROPÄISCHE PATENTSCHRIFT

(11) **EP 3 752 022 B1**
(45) Veröffentlichungstag und Bekanntmachung des Hinweises auf die Patenterteilung: **05.04.2023**
(21) Anmeldenummer: 19710592.7
(22) Anmeldetag: 15.02.2019
(51) Int. Cl.: A43B 3/10, B33Y 80/00, A43B 13/02, A43B 1/00

(54) **SANDALE MIT LÖSBARER BANDRIEMENBEFESTIGUNG**
SANDAL HAVING RELEASABLE STRAP FASTENING
SANDALES COMPRENANT UNE ATTACHE PAR LANIÈRES LIBÉRABLE

(30) Priorität: 15.02.2018 DE 202018100824 U
(43) Veröffentlichungstag der Anmeldung: 23.12.2020
(73) Patentinhaber: Reichard, Benno, 8003 Zürich (CH)
(72) Erfinder: Reichard, Benno, 8003 Zürich (CH)
(74) Vertreter: Gottfried, Hans-Peter
(86) Internationale Anmeldenummer: PCT/DE2019/100147
(87) Internationale Veröffentlichungsnummer: WO 2019/158163

(56) Entgegenhaltungen:
- WO-A1-2020/010027
- WO-A2-2006/060038
- DE-A1- 19 839 356
- DE-U1-202015 008 872
- US-A1- 2002 100 189

## Beschreibung

Die Erfindung betrifft eine Sandale mit lösbarer Bandriemenbefestigung und einen Bausatz für die Sandale. Sandalen haben gegenüber geschlossenen Schuhen den entscheidenden Vorteil, dass sie dem Träger an den Füßen ein offenes und befreiendes Gefühl geben und eine gute Belüftung der Füße ermöglichen. Sie werden vorwiegend bei Lufttemperaturen ab 20 °Celsius getragen. Nach üblicher Bauart weisen sie eine Sohle und mindestens einen Riemen auf. Die Sohle bedeckt und schützt die Fußsohle und der Riemen läuft mindestens über den Spann des Fußes, um die Sohle am Fuß zu halten. Riemen und Sohle sind in den meisten Fällen fix miteinander verbunden. Bei der weit verbreiteten Bauart mit mehrschichtig aufgebauter Sohle werden die Enden der Riemen zwischen zwei der Schichten verklebt.

Es existieren bereits auch lösbare Systeme. Bei Sandalen, bei denen die gesamte Sohle aus dem gleichen Teil realisiert ist (z. B. Flipflops), werden zum Beispiel die Riemenenden direkt durch vorgesehene Öffnungen in der Sohle geführt, über eine Verankerung fixiert und sind vielfach somit auch wieder von der Sohle lösbar. Dies ist bei Riemen aus Kunststoff üblich, welche in der Regel im Spritzgussverfahren hergestellt werden und die Verankerung somit bereits durch die Form der Riemenenden realisiert ist. Sind die Riemen dagegen aus flachem Band konzipiert, kann durch eine Naht, eine Verklebung, eine Verschweißung, einen aufgeklebten bzw. angenähten Klettverschluss oder z. B. auch ein vernietetes Zusatzelement eine Verankerung oder eine Schlaufe gebildet werden. Derart gestaltete Verbindungen erlauben dann nicht mehr, die Sandale auf trivialem Weg oder ohne Zerstörung komplett in ihre Einzelbestandteile zu zerlegen.

Im Gebrauchsmuster DE 20 2015 008 872 U1 wird bereits aus Gründen der Wiederverwertbarkeit und der technischen bzw. ökologischen Nachhaltigkeit eine sehr überzeugende Erfindung formuliert, welche auf geschlossene Schuhe ausgerichtet ist und unter anderem eine vollständig voneinander lösbare Schuh-Außenkonstruktion vorschlägt. Hierbei ist nach dem zitierten Gebrauchsmuster aus dem Stand der Technik ein "Schuhsohlenelement" und ein "Schuhschaftelement" mithilfe eines "Verbindungselementes" so miteinander zu verbinden, dass die drei Bestandteile wieder voneinander trennbar sind. Es ist aber kein zwingender und entscheidender Bestandteil der Erfindung, eine zerstörungsfreie Trennung von den Einzelbestandteilen des Verbindungselementes, also wie z. B. Bandriemen und Schnalle zu ermöglichen.

Als Weiterführung zu dem durch das Gebrauchsmuster DE 20 2015 008 872 U1 bereicherten und dem allgemeinen Stand der Technik liegt bei der vorliegenden Erfindung das Ziel zugrunde, eine möglichst simple Sandale vollständig in alle ihre Einzelbestandteile zerlegen zu können und dabei konstruktiv auf Nähte, Verschweißung, Verklebung oder anderweitige nicht ohne Zerstörung wieder voneinander trennbar Verbindungen zu verzichten.

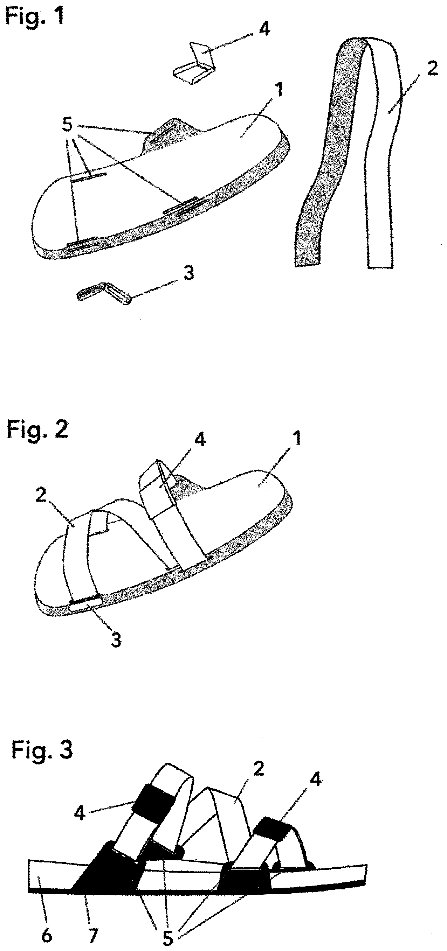

Die Druckschrift DE 20 2015 008 872 U1 offenbart eine Sandale (2) mit lösbarer Bandriemenbefestigung ([0029]), umfassend eine Sohle (4), wenigstens einen Bandriemen (8) und wenigstens eine Klemmschnalle (12) und/oder wenigstens eine Ankerschnalle, wobei die Sandale modular aufgebaut ist ([0029]) und einfach montiert und demontiert werden kann ([0029]), wobei die Sohle und der wenigstens eine Bandriemen dadurch miteinander verbunden sind (Fig. 1), dass der wenigstens eine Bandriemen durch in der Sohle vorgesehene Ösen (10) geführt wird. Jedoch ist es nicht vorgesehen, dass die beiden Enden des wenigstens einen Bandriemens, die zwei Bandenden ausbilden, mit wenigstens einer der Klemmschnallen entweder eine Schlaufe bildend wieder am Bandriemen fixiert sind oder mit wenigstens einer der Ankerschnallen an einer der Ösen verankert sind. In der Folge bietet der Bandriemen keinen ausreichenden Halt für den Fuß.

Eine weitere Bandbefestigung für den Fuß in einem Schuhwerk ist aus der Druckschrift DE 198 39 356 A1 bekannt. Dort werden allerdings mehrere Bänder benötigt, was den Aufwand für die Herstellung des Schuhwerks erhöht. Auch nach der Druckschrift WO 2006/060038 A2 sind Bänder vorgesehen, um den Fuß an einer Sandale zu halten. Allerdings werden zwei separate Bänder und zusätzliche Schnallen benötigt, was den Aufwand, insbesondere wegen deren einzelner Befestigung, erhöht. Das Schuhsystem gemäß Druckschrift US 2002/100189 A1 hingegen kommt mit einem einzigen Band 54 aus, benötigt aber zusätzlich eine herkömmliche Schnalle 55, die das Band nicht flexibel klemmt und nur an den Bereichen, die Löcher 57 aufweisen, mit der Schnalle 55 verbunden werden kann. Zudem ist ein sehr langes Band 54 erforderlich, um ohne eine weitere Klemm- oder Ankerschnalle mittels der herkömmlichen Schnalle 55 fixiert zu werden.

Damit soll als Aufgabe der vorliegenden Erfindung erstens die Montage vereinfacht werden, zweitens ein einfaches und zerstörungsfreies Austauschen der Einzelbestandteile (Sohle, Bandriemen, Schnallen) erreicht werden. Außerdem wird angestrebt, eine simple Demontage für eine sortenreine Entsorgung zu garantieren.

Dieses Ziel wird mit den in den Patentansprüchen 1 und 15 aufgeführten Merkmalen gelöst. Vorteilhafte Weiterbildungen werden mit den Unteransprüchen vorgeschlagen. Damit wird es möglich, eine Schlaufe oder Verankerung zu bilden, ohne dass der wenigstens eine Bandriemen eine Stoffverbindung, insbesondere eine Naht, eine Verschweißung, eine Verklebung und/oder eine Vernietung, aufweist.

Die Enden der Bandriemen werden durch die in der Sohle integrierten Ösen geführt und durch das Befestigen einer Ankerschnalle am Bandende entweder an der Öse verankert oder umgeschlagen mittels Klemmschnalle zusätzlich wieder am Bandriemen verklemmt. Die Klemmschnallen und die Ankerschnallen sind so konzipiert, dass sie nach dem Verschließen wieder geöffnet und dadurch wieder vom Band gelöst werden können. Eine oder mehrere der Schnallen können wahlweise so ausgeführt sein, dass sie sowohl das Bandende fixieren als auch das Straffen und Lösen des Bandriemens zur idealen Anpassung an jede Fußform ermöglichen. Es kann dabei auf bestehende Klemmschnallen-Prinzipien zurückgegriffen werden, wie z. B. Verschlussclips, welche am Bandende befestigt eine Verankerung bilden können oder z. B. herkömmliche Gürtelschnallen, bei welchen ein Bandende festgeklemmt ist und das andere Bandende, beispielsweise zur flexiblen Umfangseinstellung, durch die Gürtelschnalle geführt und durch das Verschließen variabel an unterschiedlichen Positionen verklemmt wird.

Im Gegensatz zum Stand der Technik übernimmt der wenigstens eine Bandriemen in Verbindung mit der wenigstens einen Anker- und/ oder Klemmschnalle bei der Sandale gemäß der vorliegenden Erfindung demnach die Funktion des Schuhschaftelements.

Insofern werden an den wenigstens einen Bandriemen, an die Gestaltung der Ösen und an die Konstruktion der Anker- bzw. Klemmschnallen spezifische Anforderungen gestellt. Der direkte Hautkontakt von Bandriemen und Anker- bzw. Klemmschnalle zieht sowohl Vorgaben an das Bandmaterial bezüglich Bandoberfläche, Steifigkeit, Echtheiten, Hautverträglichkeit sowie Reinigung, als auch an Konstruktion und Material der Anker- bzw. Klemmschnalle bezüglich Material, Oberfläche, Kantenbeschaffenheit sowie Sicherheit gegen Einklemmen nach sich. Die Ausgestaltung der Ösen als Anbindung von Bandriemen an die Sohle muss einerseits ausreichend Festigkeit auf Zugbeanspruchung aufweisen, als auch das einfache Durchfädeln bei Montage oder Austausch des Bandes ermöglichen.

Mit der Erfindung wird in vorteilhafter Weise erreicht, dass die Einzelschritte bei einer Montage auf ein Minimum reduziert sind und keine zusätzlichen Maschinen oder Vorrichtungen für die Montage benötigt werden. Die erfindungsgemäße Sandale kann demnach jederzeit demontiert und wieder modular zusammengestellt werden. Der Nutzer kann also seine Sandalen selbst zusammensetzen und die Bestandteile nach Belieben austauschen. Der Montageschritt im Herstellungsprozess könnte dadurch wegfallen. Damit ließen sich zusätzliche Lohnkosten einsparen und somit wäre eine Produktion an einem europäischen Standort einfacher ermöglicht, ohne dass hohe Herstellungskosten durch manuelle Montage in einem hohen Produktpreis resultieren. Nach Ende des Produktlebenszyklus besteht die Möglichkeit, die Sandale in ihren Einzelbestandteilen zu rezyklieren oder zu kompostieren, ohne dass sie vorher aufwändig in diese Bestandteile zerlegt werden muss.

Mögliche Ausführungsbeispiele der Erfindung werden anhand der Figuren 1, 2 und 3 erläutert. Sie zeigen:
Fig. 1: eine schematische perspektivische Darstellung einer Ausführungsform aller Einzelbestandteile der Sandale;
Fig. 2: eine schematische perspektivische Darstellung einer Ausführungsform einer fertig montierten Sandale und
Fig. 3: eine Seitenansicht einer fertig montierten Sandale in einer Ausführung mit einer Zweikomponenten-Sohle und die Bandenden-Fixierung mit je einer verschiebbaren Klemmschnalle.

In Fig. 1 ist schematisch ein Ausführungsbeispiel der Sandale dargestellt, bei der sie in ihre Einzelkomponenten zerlegt ist bzw. als ein Bausatz vorliegt. Dieser umfasst eine Sohle 1 mit den integrierten Ösen 5, einen Bandriemen 2, eine einfache Ankerschnalle 3 und eine Klemmschnalle 4 im offenen Zustand, die in einer auf dem Bandriemen 2 verschiebbaren Ausführung dargestellt ist.

In Fig. 2 ist das gleiche Ausführungsbeispiel in zusammengesetztem Zustand dargestellt. Hier ist der Bandriemen 2 durch alle Ösen 5 geführt und an einem Ende mit der einfachen Ankerschnalle 3 an einer der Ösen 5 verankert und mit dem anderen Ende nach dem Durchführen durch eine weitere der Ösen 5 umgeschlagen und mit der verschiebbaren Klemmschnalle 4 wieder am Bandriemen 2 befestigt.

In Fig. 3 ist ein fertig montiertes Ausführungsbeispiel gezeigt, bei dem die Sohle 1 aus einer weicheren Komponente 6 zur Dämpfung und Ausformung des Fußbettes sowie einer härteren Komponente 7 besteht, wobei die härtere Komponente 7 sowohl die Ösen 5 bildet, als auch die Untersohle formt, um Abriebfestigkeit und Durchstoßfestigkeit zu gewährleisten.

### Bezugszeichenliste

- 1: Sohle
- 2: Bandriemen
- 3: Ankerschnalle
- 4: Klemmschnalle
- 5: Ösen
- 6: weichere Komponente (der Sohle)
- 7: härtere Komponente (der Sohle)

## Patentansprüche

1. Sandale mit lösbarer Bandriemenbefestigung, umfassend eine Sohle (1), wenigstens einen Bandriemen (2) und wenigstens eine Klemmschnalle (4) und/oder wenigstens eine Ankerschnalle (3), wobei die Sandale modular aufgebaut ist und einfach montiert und demontiert werden kann, wobei die Sohle (1) und der wenigstens eine Bandriemen (2) dadurch miteinander verbunden sind, dass der wenigstens eine Bandriemen (2) durch in der Sohle (1) vorgesehene Ösen (5) geführt wird, **dadurch gekennzeichnet, dass** die beiden Enden des wenigstens einen Bandriemens (2), die zwei Bandenden ausbilden, mit wenigstens einer der Klemmschnallen (4) entweder eine Schlaufe bildend wieder am Bandriemen (2) fixiert sind oder mit wenigstens einer der Ankerschnallen (3) an einer der Ösen (5) verankert sind.

2. Sandale nach Anspruch 1, wobei die wenigstens eine Klemmschnalle (4) und/oder die wenigstens eine Ankerschnalle (3) durch Kraftschluss wirksam ist und nach dem Verschließen per Hand wieder geöffnet und vom Bandriemen (2) gelöst werden kann.

3. Sandale nach Anspruch 1 oder 2, wobei die wenigstens eine Klemmschnalle (4) so ausgeführt ist, dass sie ein umgeschlagenes Ende des Bandriemens (2) wieder am Bandriemen (2) fixiert, um damit eine Schlaufe um eine der Ösen (5) zu bilden und dadurch den Bandriemen (2) an der Sohle (1) fixieren.

4. Sandale nach Anspruch 3, wobei die wenigstens eine Klemmschnalle (4) im geöffneten Zustand verschiebbar ausgeführt ist und somit das Verkürzen und Verlängern der genutzten Bandlänge erlaubt, um eine flexible Anpassung an den Fuß zu ermöglichen.

5. Sandale nach Anspruch 1 oder 2, wobei die wenigstens eine Ankerschnalle (3) so ausgeführt ist, dass sie an wenigstens einem Bandende des Bandriemens (2) befestigt ist, um somit das Durchrutschen des Bandriemens (2) durch die Öse (5) zu verhindern und dadurch den Bandriemen (2) an der Sohle (1) fixieren.

6. Sandale nach einem der vorhergehenden Ansprüche, wobei die wenigstens eine Klemmschnalle (4) und/oder die wenigstens eine Ankerschnalle (3) sortenrein aus demselben Material gefertigt sind.

7. Sandale nach einem der vorhergehenden Ansprüche, wobei die in der Sohle (1) integrierten Ösen (5) als Durchbruch, Schlitz oder ausgeformte Schlaufe gestaltet sind.

8. Sandale nach einem der vorhergehenden Ansprüche, wobei die Sohle (1) aus nur einer Komponente besteht und die Dämpfungseigenschaft durch Konstruktionsdämpfung mittels einer 3D-Struktur realisiert ist.

9. Sandale nach einem der Ansprüche 1 bis 7, wobei die Sohle (1) aus zwei miteinander verbundenen Komponenten hergestellt ist, wobei eine weichere Komponente (6) sowohl die Dämpfungsfunktion unter der Fußsohle übernimmt als auch ein Fußbett ausformt und eine härtere Komponente (7) am Rand der Sohle (1) die auf Zug beanspruchten Ösen (5) ausbildet und/oder verstärkt.

10. Sandale nach Anspruch 9, wobei die weichere Komponente (6) die Dämpfungseigenschaft durch eine aufgeschäumte Struktur ermöglicht.

11. Sandale nach Anspruch 9 oder 10, wobei die Sohle (1) im Zweikomponenten-Spritzgussverfahren hergestellt ist, wobei beide Komponenten (6, 7) aus dem gleichen Polymer gebildet werden und somit auch im Verbund rezykliert werden können.

12. Sandale nach Anspruch 9 oder 10, wobei die Sohle (1) aus zwei miteinander durch Kleben verbundenen Komponenten (6, 7) hergestellt ist, wobei der Kleber biologisch abbaubar ist und es vorgesehen ist, dass beide Komponenten durch ein einfaches Verfahren voneinander getrennt und einzeln rezykliert werden können und/oder wobei mindestens eine der Komponenten (6, 7) aus biologisch abbaubarem Polymer besteht.

13. Sandale nach einem der Ansprüche 9 bis 12, wobei die härtere Komponente (7) neben der Ausbildung der Ösen (5) zusätzlich mindestens partiell als Untersohle ausgebildet ist und somit zusätzlich Abriebfestigkeit und Durchstoßfestigkeit gewährleisten.

14. Sandale nach einem der vorhergehenden Ansprüche, wobei der wenigstens eine Bandriemen (2) sortenrein aus biologisch abbaubarem Rohstoff hergestellt und kompostierbar ist.

15. Bausatz für eine Sandale gemäß einem der Ansprüche 1 bis 14, wobei der Bausatz eine Sohle (1), wenigstens einen Bandriemen (2) und wenigstens eine Klemmschnalle (4) und/oder wenigstens eine Ankerschnalle (3) umfasst, die werkzeugfrei montierbar und demontierbar sind, **dadurch gekennzeichnet, dass** die beiden Enden des wenigstens einen Bandriemens (2), die zwei Bandenden ausbilden, mit wenigstens einer der Klemmschnallen (4) entweder eine Schlaufe bildend wieder am Bandriemen (2) fixierbar sind oder mit wenigstens einer der Ankerschnallen (3) an einer der Ösen (5) verankerbar sind.

## Claims

1. Sandal with detachable strap fastening, comprising a sole (1), at least one strap (2) and at least one clamping buckle (4) and/or at least one anchor buckle (3), wherein the sandal is of modular construction and can be easily assembled and disassembled, the sole (1) and the at least one strap (2) being connected to each other thereby, that the at least one strap (2) is guided through eyelets (5) provided in the sole (1), **characterised in that** the two ends of the at least one strap (2), which form two strap ends, are either fixed to the strap (2) again by at least one of the clamping buckles (4) forming a loop or are anchored to one of the eyelets (5) by at least one of the anchor buckles (3).

2. The sandal according to claim 1, wherein the at least one clamping buckle (4) and/or the at least one anchor buckle (3) is effective by force closure and can be opened again manually after closure and detached from the strap (2).

3. The sandal according to claim 1 or 2, wherein the at least one clamping buckle (4) is configured to fix a turned-over end of the strap (2) back to the strap (2) so as to form a loop therewith around one of the eyes (5) and thereby fix the strap (2) to the sole (1).

4. The sandal according to claim 3, wherein the at least one clamping buckle (4) is configured to be slidable in the open state and thus allows the shortening and lengthening of the used strap length used in order to allow a flexible adaptation to the foot.

5. The sandal according to claim 1 or 2, wherein the at least one anchor buckle (3) is adapted to be attached to at least one strap end of the strap (2) so as to prevent the strap (2) from slipping through the eyelet (5) and thereby fix the strap (2) to the sole (1).

6. The sandal according to any one of the preceding claims, wherein the at least one clamping buckle (4) and/or the at least one anchor buckle (3) are made of the same material.

7. The sandal according to any one of the preceding claims, wherein the eyes (5) integrated in the sole (1) are designed as an aperture, slit or formed loop.

8. The sandal according to any one of the preceding claims, wherein the sole (1) consists of only one component and the cushioning property is realised by constructional cushioning by means of a 3D structure.

9. The sandal according to any one of claims 1 to 7, wherein the sole (1) is made of two components connected to each other, wherein a softer component (6) both takes over the cushioning function under the sole of the foot and forms a footbed, and a harder component (7) at the edge of the sole (1) forms and/or reinforces the eyes (5) subjected to tensile stress.

10. The sandal according to claim 9, wherein the softer component (6) enables the cushioning property through a foamed structure.

11. The sandal according to claim 9 or 10, wherein the sole (1) is manufactured in a two-component injection moulding process, wherein both components (6, 7) are formed from the same polymer and can thus also be recycled in the composite state.

12. The sandal according to claim 9 or 10, wherein the sole (1) is made of two components (6, 7) joined together by gluing, wherein the adhesive is biodegradable and it is provided that both components can be separated from each other by a simple process and recycled individually and/or wherein at least one of the components (6, 7) is made of biodegradable polymer.

13. The sandal according to any one of claims 9 to 12, wherein the harder component (7), in addition to forming the eyes (5), is additionally formed at least partially as an undersole and thus additionally ensures abrasion resistance and puncture resistance.

14. The sandal according to one of the preceding claims, wherein the at least one strap (2) is made from a biodegradable raw material and is compostable.

15. A kit for a sandal according to any one of claims 1 to 14, wherein the kit comprises a sole (1), at least one strap (2) and at least one clamping buckle (4) and/or at least one anchor buckle (3), which can be assembled and disassembled without tools, **characterised in that in that** the two ends of the at least one strap (2), which form two strap ends, can either be fixed to the strap (2) by means of at least one of the clamping buckles (4) so as to form a loop or can be anchored to one of the eyes (5) by means of at least one of the anchor buckles (3).

## Revendications

1. Sandale avec fixation par bride d'attache amovible, comprenant une semelle (1), au moins une bride d'attache (2) et au moins une boucle de serrage (4) et/ou au moins une boucle d'ancrage (3), dans laquelle la sandale est structurée de manière modulaire, et peut être montée et démontée simplement, dans laquelle la semelle (1) et l'au moins une bride d'attache (2) sont connectées l'une à l'autre en ce que l'au moins une bride d'attache (2) est guidée à travers des oeillets (5) prévus dans la semelle (1), **caractérisée en ce que** les deux extrémités de l'au moins une bride d'attache (2) qui forment deux extrémités d'attache sont fixées avec au moins une des boucles de serrage (4) en formant un passant de nouveau à la bride d'attache (2) ou sont ancrées avec au moins une des boucles d'ancrage (3) sur un des oeillets (5).

2. Sandale selon la revendication 1, dans laquelle l'au moins une boucle de serrage (4) et/ou l'au moins une boucle d'ancrage (3) est active par adhérence, et peut être rouverte à la main après la fermeture et détachée de la bride d'attache (2).

3. Sandale selon la revendication 1 ou 2, dans laquelle l'au moins une boucle de serrage (4) est réalisée de telle sorte qu'elle fixe de nouveau à la bride d'attache (2) une extrémité repliée de la bride d'attache (2) pour former avec elle un passant autour d'un des oeillets (5) et fixer ce faisant la bride d'attache (2) à la semelle (1).

4. Sandale selon la revendication 3, dans laquelle l'au moins une boucle de serrage (4) est réalisée de manière à pouvoir être coulissée à l'état ouvert et permet ainsi le raccourcissement et prolongement de la longueur d'attache utilisée pour permettre une adaptation flexible au pied.

5. Sandale selon la revendication 1 ou 2, dans laquelle l'au moins une boucle d'ancrage (3) est réalisée de telle sorte qu'elle est fixée à au moins une extrémité d'attache de la bride d'attache (2) pour empêcher ainsi le glissement de la bride d'attache (2) à travers l'oeillet (5) et fixer ce faisant la bride d'attache (2) à la semelle (1).

6. Sandale selon une des revendications précédentes, dans laquelle l'au moins une boucle de serrage (4) et/ou l'au moins une boucle d'ancrage (3) sont fabriquées de manière homogène à partir du même matériau.

7. Sandale selon une des revendications précédentes, dans laquelle les oeillets (5) intégrés dans la semelle (1) sont configurés en tant que perforation, fente ou passant moulé.

8. Sandale selon une des revendications précédentes, dans laquelle la semelle (1) ne se compose que d'un composant et la caractéristique d'amortissement est réalisée par amortissement de construction au moyen d'une structure tridimensionnelle.

9. Sandale selon une des revendications 1 à 7, dans laquelle la semelle (1) est fabriquée à partir de deux composants connectés l'un à l'autre, dans laquelle un composant plus mou (6) prend en charge aussi bien la fonction d'amortissement sous la semelle de pied que forme une assise plantaire, et un composant plus dur (7) sur le bord de la semelle (1) forme et/ou renforce les oeillets (5) sollicités en traction.

10. Sandale selon la revendication 9, dans laquelle le composant plus mou (6) permet la caractéristique d'amortissement par une structure moussée.

11. Sandale selon la revendication 9 ou 10, dans laquelle la semelle (1) est fabriquée dans le procédé de moulage par injection bicomposant, dans laquelle les deux composants (6, 7) sont formés du même polymère et peuvent ainsi être également recyclés conjointement.

12. Sandale selon la revendication 9 ou 10, dans laquelle la semelle (1) est fabriquée à partir de deux composants (6, 7) connectés l'un à l'autre par collage, dans laquelle l'adhésif est biodégradable et il est prévu que les deux composants puissent être séparés l'un de l'autre par un procédé simple et recyclés individuellement et/ou dans laquelle au moins un des composants (6, 7) se compose de polymère biodégradable.

13. Sandale selon une des revendications 9 à 12, dans laquelle le composant plus dur (7) est réalisé, outre la réalisation des oeillets (5), en outre au moins partiellement en tant que semelle inférieure et garantit ainsi en outre résistance à l'usure et résistance à la perforation.

14. Sandale selon une des revendications précédentes, dans laquelle l'au moins une bride d'attache (2) est fabriquée de manière homogène à partir de matière première biodégradable et peut être compostée.

15. Kit pour une sandale selon une des revendications 1 à 14, dans lequel le kit comprend une semelle (1), au moins une bride d'attache (2) et au moins une boucle de serrage (4) et/ou au moins une boucle d'ancrage (3), qui peuvent être montées et démontées sans outil, **caractérisé en ce que** les deux extrémités de l'au moins une bride d'attache (2) qui forment deux extrémités d'attache peuvent être fixées avec au moins une des boucles de serrage (4) en formant un passant de nouveau à la bride d'attache (2) ou peuvent être ancrées avec au moins une des boucles d'ancrage (3) sur un des oeillets (5).
